# EUROPÄISCHE PATENTSCHRIFT

(11) **EP 3 748 223 B1**
(45) Veröffentlichungstag und Bekanntmachung des Hinweises auf die Patenterteilung: **17.01.2024**
(21) Anmeldenummer: 20178196.0
(22) Anmeldetag: 04.06.2020
(51) Int. Cl.: F21S 4/28, F21V 3/02, F21V 8/00, F21S 8/04, F21V 17/16, F21Y 103/10, F21Y 115/10

(54) **ANORDNUNG ZUR LICHTABGABE**
ASSEMBLY FOR EMITTING LIGHT
AGENCEMENT DE DISTRIBUTION LUMINEUSE

(30) Priorität: 07.06.2019 DE 202019103211 U
(43) Veröffentlichungstag der Anmeldung: 09.12.2020
(73) Patentinhaber: Zumtobel Lighting GmbH, 6850 Dornbirn (AT)
(72) Erfinder: Machate, Andreas, 6850 Dornbirn (AT)
(74) Vertreter: Thun, Clemens

(56) Entgegenhaltungen:
- WO-A1-2014/087278
- WO-A1-2014/153578
- WO-A1-2015/172013
- DE-A1-102013 021 357
- KR-A- 20160 038 650
- US-A1- 2012 020 108
- US-A1- 2013 271 971

## Beschreibung

Die vorliegende Erfindung betrifft eine Anordnung zur Lichtabgabe, welche längliche Leuchtmittel sowie eine in Abstrahlrichtung nach den Leuchtmitteln angeordnete Abdeckung aufweist. Insbesondere betrifft die Erfindung eine Anordnung zur Lichtabgabe, die zur Realisierung längerer leuchtender Linien genutzt werden kann.

Beleuchtungsanordnungen, die über eine große Länge hinweg gleichmäßig Licht abgeben, finden in der Architektur vielfach Verwendung, da sie sich in eleganter Weise in Gebäudestrukturen integrieren lassen. Mit einem längeren leuchtenden Band können bspw. bestimmte Bereiche bzw. Flächen eines Raums gezielt optisch hervorgehoben werden, wodurch ansprechende Effekte erzielt werden können. Dabei sind sowohl Lösungen bekannt, bei denen über einen flachen länglichen Streifen hinweg Licht abgegeben wird, als auch Varianten, bei denen die Abdeckung etwa C-förmig gestaltet ist und Licht sowohl über einen Mittelschenkel der Abdeckung als auch über die beiden Seitenschenkel der Abdeckung abgegeben wird.

Üblicherweise sind bislang bekannte Lösungen derartiger Beleuchtungsanordnungen derart ausgeführt, dass sie das Licht über die gesamte zur Verfügung stehende Lichtabgabefläche hinweg diffus abgeben. Grund hierfür ist, dass eine gerichtete Lichtabgabe über eine große Strecke hinweg nur mit einem hohen Aufwand realisierbar ist und bei den beschriebenen Anwendungsfällen die Anordnungen eher als Allgemeinbeleuchtung dienen sollen. Dies bedeutet, dass sie im Vergleich zu klassischen Leuchten lediglich mit eher reduzierter Stärke Licht abgeben können, da bei einer diffusen Lichtabgabe mit zu hohen Lichtstärken die Gefahr besteht, dass unter steilen Winkel abgegebene Lichtanteile Beobachter blenden. Dementsprechend sind die bislang bekannten Lösungen nur zur Abgabe einer verhältnismäßig geringen Menge von Licht geeignet.

In der US 2013/0271971 A1 ist eine LED-Lampe vom Typ einer Leuchtstofflampe offenbart, also mit einem Lampenkörper in Form einer mittig zweigeteilten länglichen Röhre.

Die untere Lampenhälfte ist nicht durchscheinend, die obere Lampenhälfte bildet ein durchscheinendes Abdeckelement, getrennt durch ein Substrat auf dem Abdeckelement-seitig die einzelnen Licht-emittierenden Elemente sowohl in Längsrichtung als auch quer dazu beabstandet angeordnet sind. Um die durch die Beabstandung bedingte Helligkeitsvarianz zu verringern, ragen lichtleitende Lamellen von der Innenwand des Abdeckelementes in Richtung Anordnungsfläche in die das von den LED's emittierte Licht eingekoppelt wird, durch Totalreflexion im Inneren verteilt/vermischt und nach allen Seiten nach außen diffus abgestrahlt wodurch die Helligkeitsvarianz verringert wird. Transluzente Längsstege in Längsrichtung verstärken diesen Effekt. Die Kombination aus Lamellen und Längsstegen verleihen dem Lampenkörper zudem eine Steifigkeit, durch die dieser als gerades Rohr in stabiler Form gehalten wird.

In der DE 10 2013 021 357 A1 ist ein Down-Light offenbart, mit einem Lichtleiter zwischen einem LED-Element und einem Reflektor. Ein Linsenbereich des Lichtleiters wird von der unteren Öffnung des Reflektors umschlossen. Nach Durchlaufen des Lichtleiters wird das Licht kollimiert parallel zur optischen Achse nach außen (bei einem Down-Light nach unten) abgegeben. Der Reflektor ist seitlich von einem nichtopaken Leuchtenschirm umgeben, der LED-Licht, welches den Reflektor nicht durchläuft, diffus abstrahlt. Dazu wird ein Lichtleiter-Erweiterungsbereich verwendet, der sehr flach abgestrahltes LED-Licht nach mehrmaliger Totalreflexion über den Leuchtenschirm (4) diffus auskoppelt.

Die WO 2014087278 A1 offenbart eine LED-Licht emittierende röhrenartige Anordnung unter Verwendung von Lichtleitern. Eine ungleichmäßige Lichtemission der Röhre, die auf die singuläre Anordnung der einzelnen Lichtemissionselemente (LED's) zurückzuführen ist, wird durch Rhomboeder-förmige Lichtleitelemente, die teilweise überlappend so auf das LED-Element aufgebracht werden, das ein Teil des von der LED emittierten Lichtes im Inneren des Lichtleiters, teilweise mehrmals, totalreflektiert werden und am entgegengesetzten Ende in gleicher Richtung, wie das vom Lichtleiter unbeeinflusste Licht, ausgekoppelt wird, homogenisiert. Insbesondere bei zwei Lichtleitelementen pro LED-Element werden so drei Lichtquellen (Lichtpunkte) statt nur einem und somit eine höhere Leuchtpunktdichte in der Röhre erzeugt.

Die WO 2014/153578 A1 offenbart eine Leuchte mit einem Gehäuse, welches mit einer lichtdurchlässigen Abdeckung verschlossen ist. LED-licht wird in einen Lichtleiter eingekoppelt, durch innere Reflexion (Totalreflexion) zu einer Abdeckung geleitet und von dieser diffus abgestrahlt. Dadurch dass einLichtleiter vorgesehen ist, wird Raum für Betriebsgeräte geschaffen, die neben dem Lichtleiter angeordnet werden können, wodurch die Leuchte sehr klein dimensioniert werden kann.

Die WO 2015/172013 A1 offenbart eine Leuchtstoffröhren-Ersatzlampe mit einer Festkörperlichtquelle, welche die Lichtleistung einer herkömmlichen Leuchtstofflampe im Wesentlichen nachzubilden versucht. Die äußere Hülle besteht aus einem röhrenförmigen Diffusor, der das im Wesentlichen projektive, gerichtete LED-Licht aus dem Röhreninneren aufnimmt und nach außen in etwa nach Lambert'schem Muster diffus verteilt. Die Lampe weist ein zueinander symmetrisches Paar optischer Elemente auf, die innerhalb des Diffusors angeordnet und über der horizontalen Ebene (235) positioniert sind. Die Optiken sind so aufgebaut, dass LED-Licht, welches ab einem bestimmten Winkel abgestrahlt wird, in eines der beiden optischen Elemente eindringt, gebrochen und/oder an der Oberfläche so totalreflektiert wird, dass es unterhalb des Horizonts der LED bzw. in Richtung unterhalb des Horizonts abgestrahlt wird.

Die US 2012/0020108 A1 betrifft LED-Beleuchtungsvorrichtungen vom Leuchtstofflampentyp bei dem Leuchtdioden reihenförmig in ein Beleuchtungsgerät eingebaut werden. Die Leuchtstoffröhre weist innen ein plattenförmiges Lichtleitelement auf, welches die Röhre horizontal in zwei Hälften teilt. Das Licht der LED's wird seitlich in das Lichtleitelement eingekoppelt. Dabei weist die reflektierende Oberfläche des Lichtleitelementes sogenannte akzentuierte Abschnitte auf (Vorsprünge und/oder Aussparungen) an denen das Licht im Inneren des Lichtleitelementes gestreut und nach außen diffus abgestrahlt wird. Das abgestrahlte Licht überwindet die Röhrenoberfläche ebenfalls in diffuser Weise.

Die KR 20160038650 A befasst sich mit LED-Beleuchtungsvorrichtungen beispielsweise vom länglichen Typ einer LED-Leuchtstoffröhre, bei denen das LED-Element bzw. die LED-Elemente auf einem gut wärmeleitenden Substrat aufgebracht sind, welches das (rohr- bzw. kugelförmige) Lampenvolumen horizontal in zwei Teile teilt. Den oberen Teil bildet ein Diffusionselement, welches das LED-Licht diffus nach außen abgibt. Den unteren Teil bildet ein Gehäuse, welches zur besseren Wärmeabgabe eine unebene und damit vergrößerte Oberfläche aufweist. Ein Lichtleitelement ist LED-seitig konkav über die halbkugelförmige LED-Einheit gewölbt und nimmt so über eine speziell geformte Oberfläche der Innenwölbung ein maximales an Licht auf, welches direkt zum Diffusionselement geleitet, auf diesem verteilt und von diesem diffus in gewissem Grade homogen abgestrahlt wird.

Der vorliegenden Erfindung liegt die Aufgabenstellung zugrunde, eine neuartige Möglichkeit zur Realisierung einer länglichen Beleuchtungsanordnung zur Verfügung zu stellen, bei der nunmehr allerdings die Möglichkeit besteht, Licht effizienter zu beeinflussen und damit auch die insgesamt abgegebene Lichtmenge erhöhen zu können.

Die Aufgabe wird durch eine Anordnung zur Lichtabgabe, welche die Merkmale des Anspruchs 1 aufweist, gelöst. Vorteilhafte Weiterbildungen der Erfindung sind Gegenstand der abhängigen Ansprüche.

Bei der erfindungsgemäßen Anordnung zur Lichtabgabe ist vorgesehen, dass ebenso wie bei den bereits bekannten Lösungen den länglichen Leuchtmitteln zunächst eine Abdeckung zugeordnet ist, welche einen zur Lichtabgabe vorgesehenen flächigen Bereich aufweist. Erfindungsgemäß ist nunmehr allerdings zusätzlich ein Lichtleitelement vorgesehen, welches sich zwischen den Leuchtmitteln und dem zur Lichtabgabe vorgesehenen flächigen Bereich der Abdeckung erstreckt, wobei das Lichtleitelement in Bezug auf die Leuchtmittel derart angeordnet ist, dass ein erster Teil des Lichts der Leuchtmittel in das Lichtleitelement eingekoppelt wird. Das Lichtleitelement leitet dann diesen Anteil des Lichts derart weiter, dass es an der den Leuchtmitteln gegenüberliegenden Seite das Lichtleitelement wieder verlassen kann und hier durch die Abdeckung der Anordnung abgebeben wird. Ein weiterer Anteil des von den Leuchtmitteln abgegebenen Lichts hingegen wird seitlich an dem Lichtleitelement vorbeigeführt, derart, dass es ebenfalls die Abdeckung über den zur Lichtabgabe vorgesehenen flächigen Bereich verlassen kann.

Erfindungsgemäß wird also eine Anordnung zur Lichtabgabe mit länglichen Leuchtmitteln sowie einer in Abstrahlrichtung den Leuchtmitteln nachgeordneten Abdeckung vorgeschlagen, wobei die Abdeckung zumindest einen zur Lichtabgabe vorgesehenen flächigen Bereich aufweist, wobei die Anordnung ferner ein Lichtleitelement aufweist, welches sich zwischen den Leuchtmitteln und dem zur Lichtabgabe vorgesehenen flächigen Bereich der Abdeckung erstreckt, und wobei das Lichtleitelement in Bezug auf die Leuchtmittel derart angeordnet ist, dass ein erster Teil des von den Leuchtmitteln abgegebenen Lichts in das Lichtleitelement eingekoppelt und durch dieses derart weitergeleitet wird, dass es das Lichtleitelement an einer den Leuchtmitteln gegenüberliegenden Seite verlässt und durch die Abdeckung abgegeben wird, und ein zweiter Teil des von den Leuchtmitteln abgegebenen Lichts seitlich an dem Lichtleitelement vorbeigeleitet und ebenfalls über die Abdeckung abgegeben wird.

Mit Hilfe des erfindungsgemäß genutzten Lichtleitelements wird also das von den Leuchtmitteln abgegebene Licht in zwei Anteile aufgeteilt. Ein erster Anteil wird über das Lichtleitelement zu einem hierzu vorgesehenen Bereich der Abdeckung geleitet und hier abgegeben, wobei hier durch die Wirkung des Lichtleitelements gewährleistet ist, dass dieser Anteil des Lichts verhältnismäßig konzentriert bzw. auf einen bestimmten Winkelbereich beschränkt abgegeben wird. Für diesen Lichtanteil besteht also nicht die Gefahr, dass er bei Beobachtern Blendeffekte hervorruft, weshalb auf diesem Wege eine verhältnismäßig hohe Lichtmenge gebündelt abgegeben und damit zu Beleuchtungszwecken genutzt werden kann. Der weitere Anteil des Lichts hingegen, der seitlich an dem Lichtleitelement vorbeigeleitet wird, wird ebenfalls über die Abdeckung abgegeben, nunmehr allerdings über beliebige Winkelbereiche verteilt, also diffus gestreut abgegeben, sodass dieser Anteil dazu dient, im Sinne eines Akzentlichts die gesamte zur Lichtabgabe vorgesehene Fläche der Abdeckung aufzuhellen. Die Menge dieses Lichtanteils ist geringer, sodass hier nicht die Gefahr von Blendeffekten auftritt, insgesamt jedoch wiederum über die gesamte Fläche der Abdeckung hinweg eine Lichtabgabe erzielt wird, wie dies bei den eingangs beschriebenen Beleuchtungsanordnungen aus dem Stand der Technik gewünscht ist.

Wie bereits erläutert, ist vorzugsweise vorgesehen, dass der erste Anteil des Lichts, der über das Lichtleitelement weitergeleitet wird, im Wesentlichen gebündelt abgegeben wird, während hingegen der andere Lichtanteil möglichst flächig verteilt und in sämtliche Richtungen strahlend abgegeben werden soll.

Die vorliegende Erfindung ist dadurch gekennzeichnet, dass die Abdeckung in einem an das Lichtleitelement angrenzenden Bereich transparent sowie in zu diesem transparenten Bereich benachbarten Bereichen diffus streuend ausgeführt ist, wobei der erste Teil des Lichts den transparenten Bereich der Abdeckung ohne wesentliche Umlenkung und dementsprechend gerichtet verlässt. Dies kann insbesondere dadurch erzielt werden, dass die Abdeckung zunächst insgesamt aus einem transparenten Material gebildet ist, wobei allerdings an den für die diffuse Lichtabgabe vorgesehenen Bereichen entweder zusätzlich eine streuende Beschichtung oder zusätzliche lichtstreuende Elemente vorgesehen sind.

Die Abdeckung kann bspw. als sich länglich erstreckendes, plattenförmiges Element ausgeführt sein. Denkbar wäre allerdings gemäß einer bevorzugten Weiterbildung der Erfindung auch, dass die Abdeckung im Wesentlichen U-förmig gestaltet ist, wobei der für die gerichtete Lichtabgabe vorgesehene Bereich sich in dem den Leuchtmitteln gegenüberliegenden Mittelschenkel der U-Form befindet. Weitere Bereiche des Mittelschenkels werden dann ferner auch für die diffuse Lichtabgabe genutzt. Vorzugsweise können allerdings auch die beiden Seitenschenkel der Abdeckung für eine diffuse Lichtabgabe ausgebildet sein. Im Falle der U-Form der Abdeckung ist insbesondere vorgesehen, dass diese zu beiden Seiten des Lichtleitelements Hohlräume umschließt, wobei zur Optimierung der diffusen Lichtabgabe zumindest ein Teil der diese Hohlräume begrenzenden Flächen lichtstreuend, insbesondere diffus reflektierend ausgebildet sein kann.

Vorzugsweise weist die erfindungsgemäße Anordnung zur Lichtabgabe ein Trägerelement zur Lagerung der Leuchtmittel auf, wobei die Abdeckung dann entsprechende Befestigungsprofile aufweist, die ein werkzeugloses Befestigen an dem Trägerelement, bspw. ein Verrasten mit dem Trägerelement ermöglichen. Die Abdeckung kann hierbei ferner auch an ihrer dem Lichtleitelement zugewandten Seite Führungen zur Aufnahme des entsprechenden längsseitigen Endes des Lichtleitelements aufweisen. Hierdurch ist sichergestellt, dass das Lichtleitelement mit seiner für die Lichtabgabe verantwortlichen Fläche korrekt auf den vorzugsweise transparent ausgebildeten Bereich der Abdeckung ausgerichtet ist. In gleicher Weise kann auch der gegenüberliegende Bereich des Lichtleitelements entsprechend geführt gelagert sein, um eine korrekte Ausrichtung bzgl. der Leuchtmittel zu ermöglichen. Derartige Führungselemente können z.B. durch auf einer LED-Platine angeordnete Bauelemente gebildet sein.

Das Lichtleitelement selbst ist an seiner den Leuchtmitteln zugewandten Seite vorzugsweise mit linsenartigen Strukturen versehen. Diese dienen dann insbesondere einer Entblendung des in das Lichtleitelement eingekoppelten Lichts in Längsrichtung der Anordnung. In Querrichtung hingegen wird die Entblendung automatisch dadurch erzielt, dass Lichteintrittsflächen der linsenartigen Strukturen von den Leuchtmitteln derart beabstandet angeordnet sind, dass nur unter begrenzten Winkelbereichen abgegebene Lichtstrahlen in das Lichtleitelement eintreten können. Die unter größeren Winkeln abgegebenen Lichtstrahlen hingegen, die sich für die konzentrierte bzw. gebündelte Lichtabgabe eher störend auswirken würden, werden in diesem Fall dann derart seitlich an dem Lichtleitelement vorbei abgegeben, sodass sie in die bereits erwähnten Hohlräume eintreten und diffus über die weiteren Bereiche der Abdeckung abgegeben werden können. Die linsenartigen Strukturen des Lichtleitelements weisen hierbei vorzugsweise in Längsrichtung hintereinander angeordnete Ausnehmungen zur Aufnahme einzelner Leuchtmittel auf, wobei diese Ausnehmung zu beiden Seiten hin offen sind, um das seitliche Austreten der quer unter steilen Winkeln abgegebenen Lichtstrahlen zu ermöglichen.

Als Leuchtmittel kommen bevorzugt LEDs oder LED-Cluster zum Einsatz, die dann jeweils einzeln in den entsprechenden Ausnehmungen der linsenartigen Strukturen angeordnet sind.

Nachfolgend soll die Erfindung anhand der beiliegenden Zeichnung näher erläutert werden. Es zeigen:
Figur 1 ein Ausführungsbeispiel einer erfindungsgemäßen Anordnung zur Lichtabgabe in Schnittdarstellung;

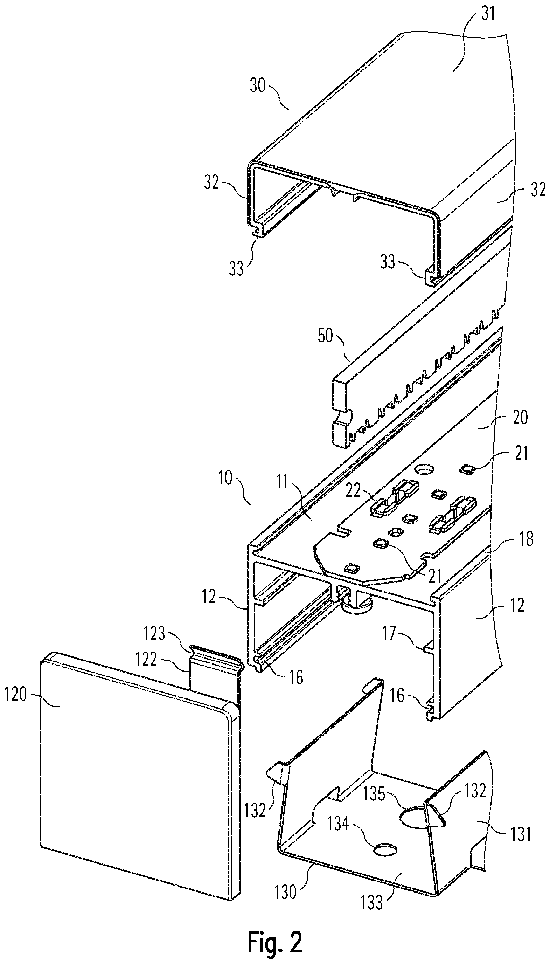

Figur 2 eine perspektivische Explosionsdarstellung der erfindungsgemäßen Anordnung von Figur 1:
   Figur 3 eine perspektivische Ansicht eines stirnseitigen Endbereichs der erfindungsgemäßen Anordnung zur Lichtabgabe;
   Figur 4 eine vergrößerte Darstellung zur Verdeutlichung der Funktionsweise des Lichtleitelements;
   Figur 5 eine vergrößerte Schnittdarstellung der linsenartigen Lichteintrittsbereiche des Lichtleitelements in Längsrichtung zur Darstellung der Entblendung des Lichts in Längsrichtung; und
   Figur 6 eine weitere Schnittdarstellung der Beleuchtungsanordnung in Längsrichtung.

Die in den Figuren mit dem Bezugszeichen 100 versehene Beleuchtungsanordnung weist als tragendes Element ein längliches Gehäuseprofil 10 auf, welches bspw. in Form eines entsprechend geformten Blechprofils oder eines Aluminiumstrangpressprofils ausgeführt sein kann. Im Falle von Beleuchtungsanordnungen, die sich über größere Distanzen hinweg erstrecken, können auch mehrere entsprechend gestaltete Gehäuseprofile 10 in Längsrichtung hintereinander angeordnet und miteinander verbunden sein, sodass sich insgesamt eine längliche tragende Struktur ergibt.

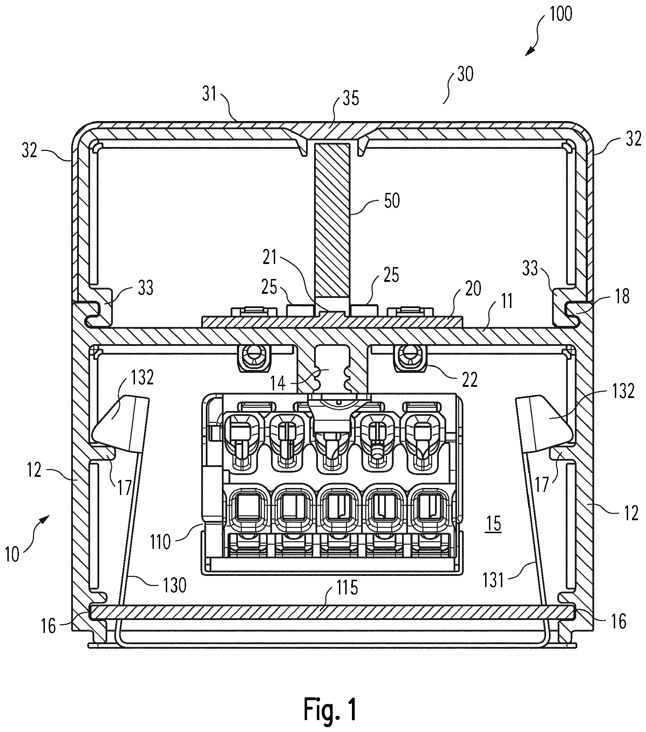

Wie die Darstellungen zeigen, ist das Gehäuseprofil 10 etwa C-förmig gestaltet und umschließt mit seinem Mittelschenkel 11 sowie den beiden Seitenschenkeln 12 einen - in Bezug auf die Lichtabgabe - rückseitigen länglichen Aufnahmeraum 15, der der Lagerung, bzw. Befestigung 14 von Betriebsmitteln 110 zum Betreiben der Leuchtmittel sowie weiterer elektronischer Komponenten zur Stromversorgung dient. Dargestellt ist in Figur 1 eine entsprechende Anschlussklemme 110, wobei in dem Aufnahmeraum 15 wie bereits erwähnt auch Betriebsgeräte angeordnet sein können, welche die Netzversorgungsspannungen in eine zum Betreiben der Leuchtmittel geeignete Betriebsspannung umsetzen. Für den Fall, dass aufgrund der Länge der Anordnung 100 verteilt mehrere Betriebsgeräte vorgesehen sind, kann der Aufnahmeraum 15 darüber hinaus auch der Lagerung von Kabeln bzw. Leitungen für eine Durchgangsverdrahtung dienen. Die Befestigung entsprechender Komponenten wird mit Hilfe eines an dem Mittelschenkel 11 des Gehäuseprofils 10 ausgebildeten, in den Aufnahmeraum 15 ragenden Schraubkanal 14 ermöglicht.

Eine rückseitige Abdeckung des Aufnahmeraums 15 wird dadurch ermöglicht, dass die beiden Seitenwände 12 des Gehäuseprofils 10 an ihren Endbereichen derart profiliert sind, dass zwei einander gegenüberliegende, längliche Führungsnuten 16 gebildet sind. Diese ermöglichen wie in Figur 1 gezeigt das stirnseitige Einschieben von Abdeckplatten 115, sodass hierdurch die Anordnung 100 rückseitig geschlossen werden kann.

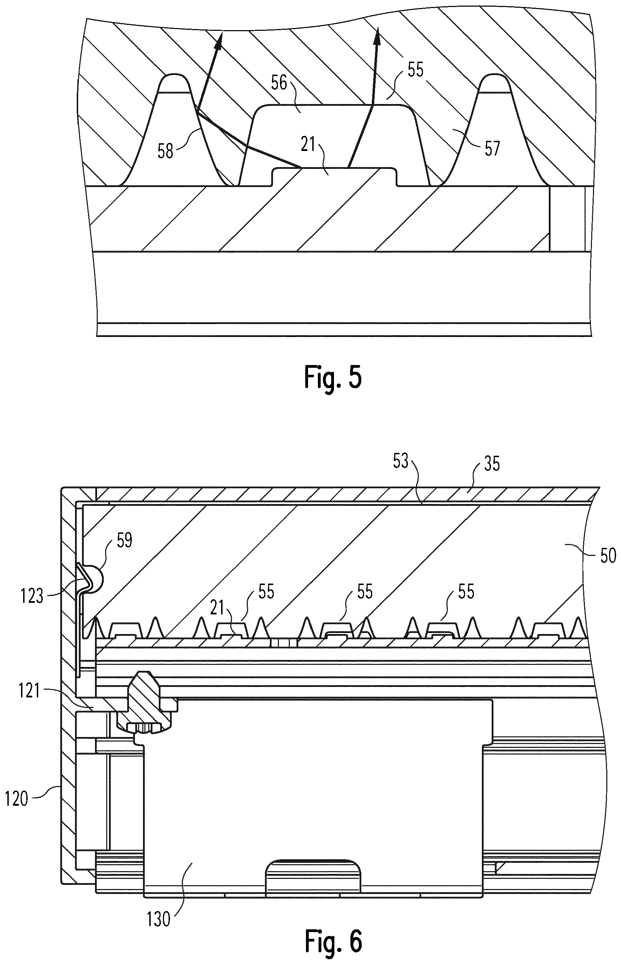

Ein stirnseitiges Abschließen der Anordnung 100 wird durch Abdeckkappen 120 ermöglicht, die jeweils stirnseitig auf das Gehäuseprofil 10 aufgesetzt werden können und hierbei einen in Figur 6 erkennbaren, nach innen ragenden Schenkel 121 aufweisen, der bspw. ein Verschrauben mit dem Gehäuseprofil 10 ermöglicht. Wiederum kann hierfür der bereits erläuterte Schraubkanal 14 genutzt werden. Die Abdeckkappen 120 überdecken dabei auch den nachfolgend noch näher beschriebenen oberen, für die Lichtabgabe vorgesehenen Bereich der Anordnung 100, wobei hier insbesondere auch eine Feder 122 mit einem nach innen ragenden Vorsprung 123 vorgesehen ist, der einer Fixierung des nachfolgend noch näher erläuterten Lichtleitelements dient.

Eine Halterung der gesamten Anordnung 100 wird mit Hilfe mehrerer, verteilt angeordneter Befestigungsfedern 130 ermöglicht. Auch diese sind etwa C-förmig ausgestaltet und weisen an ihren Seitenschenkeln 131 nach außen ragende Vorsprünge 132 auf, welche ein Verrasten mit von den Seitenwänden 12 des Gehäuseprofils 10 nach innen ragenden Vorsprüngen bzw. Stegen 17 ermöglichen. An ihrem Mittelschenkel 133 weisen die Befestigungsfedern 130 jeweils entsprechende Öffnungen 134, 135 auf, über die bspw. ein Verschrauben an einem Trägerelement - bspw. einer Decke eines Raums - oder das Befestigen von Aufhängungselementen ermöglicht wird. Bei einer Montage der Anordnung 100 werden zunächst diese Befestigungsfedern 130 an dem Trägerelement bzw. den Aufhängungselementen fixiert und dann das Gehäuseprofil 10 auf die Federn 130 aufgeschnappt, wodurch eine zuverlässige Halterung der gesamten Beleuchtungsanordnung 100 ermöglicht wird.

Die für die erfindungsgemäße Lichtabgabe verantwortlichen Komponenten der Beleuchtungsanordnung 100 sind auf der dem Aufnahmeraum 15 gegenüberliegenden Seite des Mittelschenkels 11 des Gehäuseprofils 10 angeordnet und sollen nunmehr detailliert erläutert werden.

Als Leuchtmittel kommen hierbei zunächst ein oder mehrere LED-Platinen 20 mit in Längsrichtung hintereinander angeordneten LEDs 21 zum Einsatz. Die LEDs 21 bilden somit eine sich über die gesamte Länge der Beleuchtungsanordnung 100 hinweg erstreckende, lineare Lichtquelle. Die Befestigung der Platinen 20 erfolgt mit Hilfe entsprechender Durchgangsöffnungen in dem Mittelschenkel 11 des Gehäuseprofils 10, wobei Kontaktierungselemente 22 der Platinen 20 diese Öffnungen rastend durchgreifen und hierdurch gleichzeitig auch eine Stromversorgung der Platinen 20 von dem Aufnahmeraum 15 des Gehäuseprofils 10 her ermöglicht wird.

Das von den LEDs 21 abgegebene Licht soll dann insgesamt über eine wiederum etwa C-förmig ausgebildete Abdeckung 30 abgegeben werden, welche einen Mittelschenkel 31 sowie Seitenschenkel 32 aufweist. Die Befestigung der Abdeckung 30 an dem Gehäuseprofil 10 erfolgt hierbei mit Hilfe von Rastprofilen 33, die jeweils an den Endbereichen der Seitenschenkel 32 der Abdeckung 30 ausgebildet sind und mit entsprechenden Rastprofilen 18 des Gehäuseprofils 10 zusammenwirken. Hierdurch kann die Abdeckung 30 entweder auf das Gehäuseprofil 10 aufgeschnappt oder stirnseitig auf dieses aufgeschoben werden.

Die Nutzung von länglichen LED-Leuchtmitteln in Kombination mit einer C-förmigen Abdeckung war auch bei entsprechenden Beleuchtungsanordnungen aus dem Stand der Technik bislang bereits bekannt. Neu ist nunmehr, dass gemäß der vorliegenden Erfindung sowohl die Abdeckung 30 in spezieller Weise gestaltet ist als auch ein zusätzliches, die Lichtabgabe beeinflussendes Element vorgesehen ist, welches die Möglichkeit eröffnet, Licht mit einer höheren Intensität gerichtet abzugeben, gleichzeitig jedoch wie auch bislang eine im Wesentlichen gleichmäßige diffuse Lichtabgabe über die Abdeckung 30 hinweg zu erzielen.

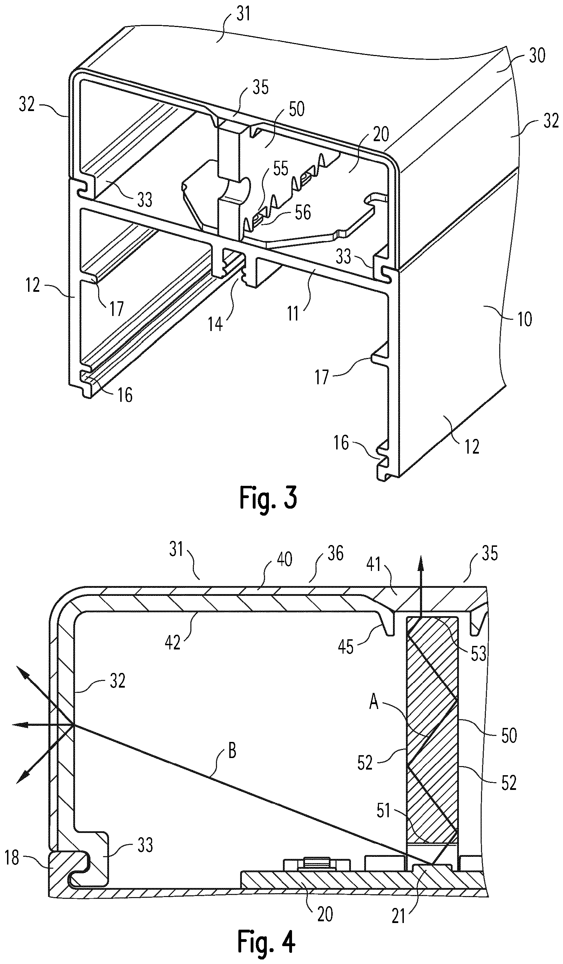

Für die erfindungsgemäße Lichtabgabe verantwortlich ist ein längliches, streifenartiges Lichtleitelements 50, das sich zentral ausgehend von den LEDs 21 zu dem gegenüberliegenden, mittigen Bereich des Mittelschenkels 31 der Abdeckung 30 hin erstreckt. Das parallel zu den LEDs 21 verlaufende, einen im Wesentlichen rechteckigen Querschnitt aufweisende Lichtleitelement 50 teilt also wie in Figur 1 erkennbar den von der Abdeckung 30 umschlossenen Raum in zwei Hohlräume auf, bildet gleichzeitig allerdings eine direkte optische Verbindung zwischen den LEDs 21 und dem entsprechenden mittigen Bereich des Mittelschenkels 31 der Abdeckung 30. Hierbei ist allerdings das Lichtleitelement 50 bewusst derart ausgeführt, dass Lichteintrittsflächen des Lichtleitelements 50 einen gewissen Abstand zu den LEDs 21 aufweisen, was zur Folge hat, dass nicht das gesamte von den LEDs 21 emittierte Licht in das Lichtleitelement 50 eingekoppelt wird. Hierdurch ergibt sich eine Wirkung des Lichtleitelements 50, wie sie anhand von Figur 4 nachfolgend näher erläutert wird.

Figur 4 zeigt hierbei schematisch den Verlauf verschiedener Lichtstrahlen, die von der dargestellten LED 21 emittiert werden. Bekannterweise emittieren LEDs 21 Licht über einen verhältnismäßig breiten Winkelbereich, was letztendlich bei der dargestellten Anordnung zur Folge hat, dass Licht durch die erfindungsgemäße Anordnung 100 über zwei unterschiedliche Wege emittiert werden kann.

Ein erster Anteil des von der LED 21 emittierten Lichts - schematisch verdeutlicht durch den Strahlenverlauf A - wird hierbei unter verhältnismäßig flachen Winkeln - in Bezug auf die Senkrechte zur LED-Oberfläche bzw. auf die Mittelebene des Lichtleitelements 50 - über die den LEDs 21 zugewandten Flächen 51 des Lichtleitelements 50 in dieses eintreten und durch die totalreflektierend wirkenden Seitenwände 52 des Lichtleitelements 50 bis zu dessen Oberseite, also der den LEDs 21 gegenüberliegenden Längsseite 53 weitergeleitet werden. Hier können die entsprechenden Lichtstrahlen das Lichtleitelement 50 wieder verlassen und treten hierbei unmittelbar in den der Seitenfläche 53 zugewandten zentralen Bereich 35 des Mittelschenkels 31 der Abdeckung 30 ein. Vorzugsweise ist dieser Bereich 35 der Abdeckung 30 transparent ausgebildet, sodass die Lichtstrahlen ohne wesentliche Umlenkung die Abdeckung 30 verlassen können.

Der auf diese Weise abgegebene Anteil des Lichts ist dementsprechend verhältnismäßig stark gebündelt bzw. gerichtet, da aufgrund des Abstands der Lichteintrittsfläche 51 des Lichtleitelements 50 zur leuchtenden Oberfläche der LED 21 nur unter verhältnismäßig flachen Winkeln abgegebene Lichtstrahlen überhaupt in das Lichtleitelement 50 eintreten können. Die Totalreflexionen an den Seitenwänden 52 des Lichtleitelements 50 sowie die transparente Ausgestaltung des zentralen Bereichs 35 des Mittelschenkels 31 der Abdeckung 30 sorgen hierbei dafür, dass die Abstrahlwinkel dieser Lichtstrahlen nicht mehr wesentlich verändert werden. Da ein wesentlicher Anteil des von der LED 21 abgegebenen Lichts in Vorwärtsrichtung abgegeben wird und somit in das Lichtleitelement 50 eintreten kann, hat dies zur Folge, dass eine verhältnismäßig hohe Lichtmenge über den zentralen länglichen Bereich 35 der Abdeckung 30 gerichtet abgegeben werden kann. Diese Lichtmenge übersteigt deutlich die Intensität des bei bislang bekannten Lösungen abgegebenen Lichts, führt allerdings aufgrund der zuvor erläuterten Bündelung des Lichts zu keinen nennenswerten Blendeffekten für Beobachter. Damit kann dieser Lichtanteil gezielt auch zur Beleuchtung von unterhalb der Anordnung 100 befindlichen Bereichen genutzt werden.

Andererseits hat der bereits erwähnte Abstand der Lichteintrittsflächen 51 des Lichtleitelements 50 zu den LEDs 21 zur Folge, dass unter steilen Winkeln seitlich abgestrahlte Lichtstrahlen - verdeutlicht durch den Strahlenverlauf B - nicht in das Lichtleitelement 50 eintreten, sondern an diesem vorbeigeleitet werden. Genau genommen können aufgrund des Abstands derartige Lichtstrahlen seitlich in die beiden von der Abdeckung 30 umschlossenen Hohlräume eintreten und über die weiteren flächigen Bereiche der Abdeckung 30 abgegeben werden. Es handelt sich hierbei um die zu beiden Seiten des zentralen Bereichs 35 ausgebildeten seitlichen Bereiche 36 des Mittelschenkels 31 sowie um die beiden Seitenschenkel 32 der Abdeckung 30. Diese ist in diesen Bereichen - wie nachfolgend noch näher erläutert - vorzugsweise diffus streuend ausgeführt, derart, dass über diese Bereiche abgegebenes Licht möglichst gleichmäßig in alle Richtungen abgestrahlt wird.

Die Menge des auf diesem Wege abgegebenen Lichts ist allerdings im Vergleich zu der über das Lichtleitelement 50 weitergeleiteten und über den zentralen Bereich 35 gerichtet abgestrahlten Lichtmenge deutlich reduziert, sodass diese Anteile des von der Abdeckung 30 abgestrahlten Lichts wiederum nicht zu Blendeffekten führen können. Letztendlich bedeutet dies, dass wiederum über die gesamte Fläche der lichtdurchlässigen Bereiche der Abdeckung 30 hinweg Licht abgegeben wird, sodass die Abdeckung 30 insgesamt als Licht abgebendes, aufgehelltes Element erscheint, wobei jedoch nunmehr zusätzlich über den zentralen Bereich 35 gerichtet eine hohe Menge an Licht abgegeben wird, welches zu Beleuchtungszwecken genutzt werden kann.

Die nähere Ausgestaltung der Lichteintrittsbereiche des Lichtleitelements 50 ist anhand der Figuren 5 und 6 erkennbar. Die seitlichen Ansichten zeigen hierbei, dass die den LEDs 21 zugewandte Seite des Lichtleitelements 50 linsenartige Strukturen 55 aufweist, wobei Figur 5 in vergrößerter Darstellung eine einzelne linsenartige Struktur 55 zeigt.

Aus der in Figur 5 dargestellten Richtung betrachtet, gleichen die linsenartigen Strukturen 55 derjenigen einer klassischen sog. TIR-Linse. D.h., die Struktur 55 weist eine Ausnehmung 56 auf, in welche die LED 21 vorzugsweise leicht hineinragt, wobei die Bodenfläche und die Seitenflächen der Ausnehmung 56 Lichteintrittsflächen für das Lichtleitelement 50 bilden. In bekannter Weise sind hierbei die seitlichen Bereiche 57 der linsenartigen Struktur 55 derart ausgeführt, dass in diese Bereiche 57 eintretende Lichtstrahlen an deren Außenflächen 58 totalreflektiert werden und - wie in Figur 5 schematisch dargestellt - im Wesentlichen gerichtet zur Oberseite hin umgelenkt werden. Hierdurch wird eine Entblendung des Lichts in Längsrichtung der Anordnung bewirkt. Derartige Linsenstrukturen sind an sich bereits bekannt und können beispielsweise mit Hilfe eines Lasers in den Endbereich des Lichtleitelements 50 eingearbeitet werden. Das Lichtleitelement 50 kann hierzu beispielsweise aus PMMA gebildet sein.

In Querrichtung hingegen wird die Entblendung wie bereits erwähnt dadurch erzielt, dass die Lichteintrittsflächen des Lichtleitelements 50 in entsprechender Weise von der LED 21 beabstandet sind und insbesondere die Öffnungen bzw. Ausnehmungen 56 der linsenartigen Strukturen 55 zu beiden Seiten hin offen sind, wie dies insbesondere auch die Darstellung in Figur 3 zeigt. Unter steilen Winkeln in Querrichtung abgegebene Lichtstrahlen der LEDs 21 treten dann also in die von der Abdeckung 30 umschlossenen Hohlräume ein, wie dies zuvor beschrieben wurde.

Figur 6 zeigt weiterhin auch, dass das Lichtleitelement 50 an seinen Stirnseiten Ausnehmungen 59 aufweist, in welche die bereits erwähnten Federvorsprünge 123 der Stirnkappen 120 eingreifen. Hierdurch wird die Position des Lichtleitelements 50 in Längsrichtung fixiert und weiterhin sichergestellt, dass jeder Ausnehmung 56 einer linsenartigen Struktur 55 genau eine LED 21 bzw. ggf. ein entsprechendes LED-Cluster zugeordnet ist.

Die Abdeckung 30 soll wie bereits erwähnt derart ausgeführt sein, dass diese im zentralen Bereich 35, der der Lichtaustrittsfläche 53 des Lichtleitelements 50 zugeordnet ist, transparent ausgeführt ist, die weiteren Bereiche der Abdeckung 30 hingegen diffus streuend ausgeführt sind. Erzielt wird dies im dargestellten Ausführungsbeispiel dadurch, dass die Abdeckung zunächst aus einem C-förmigen Primärelement 40 gebildet ist, welches durchgängig transparent ausgeführt ist und insbesondere in Form einer im Querschnitt trapezartigen Verdickung 41 den zentralen Bereich 35 bildet. Dieses Primärelement 40 dient gleichzeitig allerdings auch der Aufnahme diffus streuender Zusatzteile 42, welche jeweils die seitlichen Bereiche 36 des Mittelschenkels 31 sowie die Seitenschenkel 32 überdecken. Diese zusätzlichen Teile 42 können in geeigneter Weise mit dem transparenten Teil 40 verbunden, beispielsweise verschmolzen, verklebt oder verrastet werden, sodass insgesamt eine einstückige Anordnung für die Abdeckung 30 erzielt wird. Ggf. wäre auch eine entsprechende Beschichtung des transparenten Bauteils 40 oder eine entsprechende aufrauhende Bearbeitung derjenigen Flächen, die letztendlich Licht diffus streuen sollen, denkbar. Bevorzugt wird die Abdeckung aber wie dargestellt einstückig hergestellt, aus den zwei Kunststoffkomponenten, diffus-lichtstreuend und transparent, mittels Co-Extrusionsverfahren oder anderen Mehrkomponenten Fertigungsverfahren.

In dargestellten Ausführungsbeispiel ist ferner vorgesehen, dass die diffus streuenden Zusatzteile 42 die bereits erwähnten Rastprofile 33 bilden. Weiterhin weisen die Zusatzteile 42 an ihren Innenseiten nach unten ragende Führungsstege 45 auf, durch die ein länglicher Aufnahmekanal geschaffen wird, in den der obere Endbereich des Lichtleitelements 50 hineinragt. Auf diesem Wege wird eine entsprechende Führung für das Lichtleitelement 50 erzielt, sodass sichergestellt ist, dass dieses tatsächlich dem für die gerichtete Lichtabgabe vorgesehenen zentralen Bereich 35 zugeordnet ist.

An seinem unteren Ende kann das Lichtleitelement 50 ebenfalls geführt gelagert werden. Hierfür könnten an der Oberseite der Platine 20 sogenannte Leiterplattenstifte oder mechanische Abstandshalter/ Führungen oder Elemente 25 vorgesehen sein, die grundsätzlich für die Stromversorgung der LEDs 21 verantwortlich sind, nunmehr aufgrund ihrer Lage allerdings zusätzlich auch eine Führung für das Lichtleitelement 50 ermöglichen. Häufig werden Platinen auch über Kunststoffelemente zum Gehäuseprofil hin befestigt/ bzw. verspannt. Sie übernehmen dann häufig die Halterungsfunktion einer Optik. Diese umgreifen die Platine in unserem Fall partiell, sie bieten sich daher gut an ein Lichtleitelement zu führen bei Ausbildung einer entsprechend geeigneten Führung beidseitig der LED Position.

In die seitlichen Bereiche des von der Abdeckung 30 umschlossenen Hohlraums eintretende Lichtstrahlen sollen wie bereits erwähnt möglichst gleichmäßig verteilt über die entsprechenden Oberflächenbereiche der Abdeckung 30 abgegeben werden. Um diesen Effekt zu optimieren, kann vorgesehen sein, dass diese Hohlräume begrenzende Flächen oder Wände ggf. diffus streuend oder diffus reflektierend ausgebildet sind, so dass diese Hohlräume die Wirkung sog. Mischkammern aufweisen. Dies kann bspw. für die entsprechenden Oberflächen der LED-Platine 20 oder des Gehäuseprofils 10 gelten. Ggf. wäre auch denkbar, die Seitenschenkel 32 der Abdeckung 30 diffus reflektierend auszuführen, was dann zur Folge hätte, dass Licht lediglich über den Mittelschenkel 31 der Abdeckung 30 abgestrahlt wird, allerdings wiederum in der erfindungsgemäßen Weise, also einerseits gerichtet über den zentralen Bereich 35 und andererseits diffus über die seitlichen Bereiche 36.

Letztendlich stellt also die erfindungsgemäße Lösung eine Weiterentwicklung bislang bekannter Anordnungen zur Lichtabgabe dar, durch welche die Möglichkeiten zu gerichteten Beleuchtung und damit die Einsatzmöglichkeiten deutlich erweitert werden. Dabei kann das Konzept auch dahingehend erweitert werden, dass parallel zueinander mehrere Leuchtmittel und zugehörige Lichtleitelemente vorgesehen sind. Die Menge des gerichtet abgestrahlten Lichts kann hierdurch nochmals deutlich erhöht werden.

## Patentansprüche

1. Anordnung zur Lichtabgabe (100) mit länglichen Leuchtmitteln (21) sowie einer in Abstrahlrichtung den Leuchtmitteln (21) nachgeordneten Abdeckung (30), welche zumindest einen zur Lichtabgabe vorgesehenen flächigen Bereich aufweist, wobei die Anordnung (100) ferner ein Lichtleitelement (50) aufweist, welches sich zwischen den Leuchtmitteln (21) und dem zur Lichtabgabe vorgesehenen flächigen Bereich der Abdeckung (30) erstreckt, wobei das Lichtleitelement (50) in Bezug auf die Leuchtmittel (21) derart angeordnet ist, dass
• ein erster Teil des von den Leuchtmitteln (21) abgegebenen Lichts in das Lichtleitelement (50) eingekoppelt und durch dieses derart weitergeleitet wird, dass es das Lichtleitelement (50) an einer den Leuchtmitteln (21) gegenüberliegenden Seite (53) verlässt und durch die Abdeckung (30) abgegeben wird, und
• ein zweiter Teil des von den Leuchtmitteln (21) abgegebenen Lichts seitlich an dem Lichtleitelement (50) vorbei geleitet und ebenfalls über die Abdeckung (30) abgegeben wird,
wobei die Abdeckung (30) in einem an das Lichtleitelement (50) angrenzenden Bereich (35) transparent sowie in zu diesem Bereich (35) benachbarten Bereichen (36) diffus streuend ausgeführt ist,
**dadurch gekennzeichnet,**
**dass** der erste Teil des Lichts den transparenten Bereich (35) der Abdeckung (30) ohne wesentliche Umlenkung und dementsprechend gerichtet verlässt.

2. Anordnung zur Lichtabgabe nach Anspruch 1,
**dadurch gekennzeichnet,**
**dass** die Abdeckung (30) aus einem transparenten Bauteil (40) gebildet ist, wobei die Abdeckung (30) an den für die diffuse Lichtabgabe vorgesehenen Bereichen eine streuende Beschichtung oder zusätzliche streuende Elemente (42) aufweist.

3. Anordnung zur Lichtabgabe nach einem der vorherigen Ansprüche,
**dadurch gekennzeichnet,**
**dass** die Abdeckung (30) im Wesentlichen U-förmig gestaltet ist, wobei der für die gerichtete Lichtabgabe vorgesehene Bereich (35) an einem den Leuchtmitteln (21) gegenüberliegenden Mittelschenkel (31) der U-Form ausgebildet ist und wobei vorzugsweise zwei zu beiden Seiten des Mittelschenkels (31) ausgebildete Seitenschenkel (32) ebenfalls für eine diffuse Lichtabgabe ausgebildet sind.

4. Anordnung zur Lichtabgabe nach Anspruch 3,
**dadurch gekennzeichnet,**
**dass** die Abdeckung (30) zu beiden Seiten des Lichtleitelements (50) Hohlräume umschließt, wobei zumindest ein Teil der diese Hohlräume begrenzenden Flächen lichtstreuend, insbesondere diffus reflektierend ausgebildet sind.

5. Anordnung zur Lichtabgabe nach einem der vorherigen Ansprüche,
**dadurch gekennzeichnet,**
**dass** diese ein Trägerelement (10) zur Lagerung der Leuchtmittel (21) aufweist, wobei die Abdeckung Befestigungsprofile (33) zum Verrasten mit dem Trägerelement (10) aufweist.

6. Anordnung zur Lichtabgabe nach einem der vorherigen Ansprüche,
**dadurch gekennzeichnet,**
**dass** die Abdeckung (30) an ihrer dem Lichtleitelement (50) zugewandten Seite Führungen (45) zur Aufnahme des längsseitigen Endes des Lichtleitelements (50) aufweist.

7. Anordnung zur Lichtabgabe nach einem der vorherigen Ansprüche,
**dadurch gekennzeichnet,**
**dass** das Lichtleitelement (50) an seiner den Leuchtmitteln (21) zugewandten Seite mit linsenartigen Strukturen (55) versehen ist.

8. Anordnung zur Lichtabgabe nach Anspruch 7,
**dadurch gekennzeichnet,**
**dass** die linsenartigen Strukturen (55) in Längsrichtung hintereinander angeordnete Ausnehmungen (56) zur Aufnahme einzelner Leuchtmittel (21) aufweisen, wobei die Ausnehmungen (56) - in Querrichtung betrachtet - zu beiden Seiten offen sind.

9. Anordnung zur Lichtabgabe nach Anspruch 8,
**dadurch gekennzeichnet,**
**dass** die linsenartigen Strukturen (55) dazu ausgebildet sind, in das Lichtleitelement (50) eintretende Lichtstrahlen in Längsrichtung zu entblenden.

## Claims

1. Arrangement (100) for light emission having elongate illuminants (21) and a cover (30) arranged downstream in the emission direction of the illuminants (21), which cover has at least one planar region provided for light emission,
the arrangement (100) further comprising a light guide element (50) which extends between the illuminants (21) and the planar region of the cover (30) provided for light emission, the light guide element (50) being arranged in relation to the illuminants (21) such that
• a first portion of the light emitted by the illuminants (21) is coupled into the light guide element (50) and is transmitted thereby in such a way that it leaves the light guide element (50) on a side (53) opposite the illuminants (21) and is emitted by means of the cover (30), and
• a second portion of the light emitted by the illuminants (21) is guided laterally past the light guide element (50) and is also emitted via the cover (30),
the cover (30) being designed to be transparent in a region (35) adjacent to the light guide element (50) and being designed so as to diffusely scatter in regions (36) adjacent to this region (35),
**characterized in that**
the first portion of the light leaves the transparent region (35) of the cover (30) without substantial deflection and in an accordingly directed manner.

2. Arrangement for light emission according to claim 1,
**characterized in that**
the cover (30) is formed from a transparent component (40), the cover (30) having a scattering coating or additional scattering elements (42) on the regions provided for the diffuse light emission.

3. Arrangement for light emission according to any of the preceding claims,
**characterized in that**
the cover (30) is designed to be substantially U-shaped, the region (35) provided for the directed light emission being formed at a middle leg (31) of the U-shape opposite the illuminants (21) and preferably two side legs (32) formed on both sides of the middle leg (31) also being designed for a diffuse light emission.

4. Arrangement for light emission according to claim 3,
**characterized in that**
the cover (30) encloses cavities on both sides of the light guide element (50), at least one portion of the surfaces delimiting these cavities being designed to be light-scattering, in particular diffusely reflective.

5. Arrangement for light emission according to any of the preceding claims,
**characterized in that**
it has a support element (10) for mounting the illuminants (21), the cover having fastening profiles (33) for latching to the support element (10).

6. Arrangement for light emission according to any of the preceding claims,
**characterized in that**
the cover (30) has guides (45) on its side facing the light guide element (50) for receiving the longitudinal end of the light guide element (50).

7. Arrangement for light emission according to any of the preceding claims,
**characterized in that**
the light guide element (50) is provided with lens-like structures (55) on its side facing the illuminants (21).

8. Arrangement for light emission according to claim 7,
**characterized in that**
the lens-like structures (55) have recesses (56) arranged one behind the other in the longitudinal direction for receiving individual ilium inants (21), the recesses (56)-viewed in the transverse direction-being open on both sides.

9. Arrangement for light emission according to claim 8,
**characterized in that**
the lens-like structures (55) are designed to prevent glare in light beams entering the light guide element (50) in the longitudinal direction.

## Revendications

1. Agencement (100) pour l'émission de lumière comportant des moyens d'éclairage (21) allongés ainsi qu'un élément de recouvrement (30) disposé en aval des moyens d'éclairage (21) dans le sens d'émission, lequel élément de recouvrement présente au moins une zone plane prévue pour l'émission de lumière,
l'agencement (100) présentant en outre un élément de guidage de lumière (50) qui s'étend entre les moyens d'éclairage (21) et la zone plane de l'élément de recouvrement (30) prévue pour l'émission de lumière, l'élément de guidage de lumière (50) étant disposé, par rapport aux moyens d'éclairage (21), de manière telle
• qu'une première partie de la lumière émise par les moyens d'éclairage (21) se couple dans l'élément de guidage de lumière (50) et est transmise par celui-ci de manière telle qu'elle quitte l'élément de guidage de lumière (50) sur le côté (53) opposé aux moyens d'éclairage (21) et est émise à travers l'élément de recouvrement (30) et
• qu'une seconde partie de la lumière émise par les moyens d'éclairage (21) est guidée latéralement au-delà de l'élément de guidage de lumière (50) et également émise par l'intermédiaire de l'élément de recouvrement (30),
l'élément de recouvrement (30) étant réalisé transparent dans une zone (35) adjacente à l'élément de guidage de lumière (50) ainsi que diffusément dispersif dans des zones (36) adjacentes à cette zone (35),
**caractérisé en ce que**
la première partie de la lumière quitte la zone transparente (35) de l'élément de recouvrement (30) sans déviation sensible et donc de manière orientée.

2. Agencement pour l'émission de lumière selon la revendication 1,
**caractérisé en ce que**
l'élément de recouvrement (30) est formé à partir d'un composant transparent (40), l'élément de recouvrement (30) présentant, au niveau des zones prévues pour l'émission diffuse de la lumière, un revêtement dispersif ou des éléments dispersifs (42) supplémentaires.

3. Agencement pour l'émission de lumière selon l'une des revendications précédentes,
**caractérisé en ce que**
l'élément de recouvrement (30) est conçu sensiblement en forme de U, la zone (35) prévue pour l'émission orientée de la lumière étant formée au niveau d'une branche centrale (31), située à l'opposé des moyens d'éclairage (21), de la forme de U et deux branches latérales (32) formées sur les deux côtés de la branche centrale (31) étant également formées pour une émission diffuse de la lumière.

4. Agencement pour l'émission de lumière selon la revendication 3,
**caractérisé en ce que**
l'élément de recouvrement (30) enveloppe, sur les deux côtés de l'élément de guidage de lumière (50), des espaces creux, au moins une partie des surfaces délimitant ces espaces creux étant formée de manière dispersive, en particulier de manière diffusément réfléchissante.

5. Agencement pour l'émission de lumière selon l'une des revendications précédentes,
**caractérisé en ce**
**qu'**il présente un élément support (10) pour le logement des moyens d'éclairage (21), l'élément de recouvrement présentant des profilés de fixation (33) pour l'encliquetage avec l'élément support (10).

6. Agencement pour l'émission de lumière selon l'une des revendications précédentes,
**caractérisé en ce que**
l'élément de recouvrement (30) présente, au niveau de son côté orienté vers l'élément de guidage de lumière (50), des guides (45) pour la réception de l'extrémité longitudinale de l'élément de guidage de lumière (50).

7. Agencement pour l'émission de lumière selon l'une des revendications précédentes,
**caractérisé en ce que**
l'élément de guidage de lumière (50) est pourvu de structures (55) de type lentille au niveau de son côté orienté vers les moyens d'éclairage (21).

8. Agencement pour l'émission de lumière selon la revendication 7,
**caractérisé en ce que**
les structures (55) de type lentille présentent, dans la direction longitudinale, des évidements (56) disposés les uns derrière les autres pour la réception des moyens d'éclairage (21) individuels, les évidements (56) étant ouverts de deux côtés, lorsqu'on les observe dans la direction transversale.

9. Agencement pour l'émission de lumière selon la revendication 8,
**caractérisé en ce que**
les structures (55) de type lentille sont formées pour éviter l'éblouissement par les rayons lumineux entrant dans l'élément de guidage de lumière (50).
